# EUROPEAN PATENT APPLICATION

(11) **EP 4 841 689 A1**
(43) Date of publication of application: **18.11.2026**
(21) Application number: 25877607.9
(22) Date of filing: 01.10.2025
(51) Int. Cl.: H01M 4/131, H01M 4/133, H01M 4/36, H01M 4/134, H01M 4/48, H01M 4/587, H01M 4/38, H01M 10/052, H01M 4/02

(54) **NEGATIVE ELECTRODE AND LITHIUM SECONDARY BATTERY COMPRISING SAME**

(30) Priority: 08.10.2024 KR 20240136593
(71) Applicant: LG Energy Solution, Ltd., Seoul 07335 (KR)
(72) Inventor: SEONG, Eun Kyu, Daejeon 34122 (KR); KIM, Hwi Jung, Daejeon 34122 (KR); LIM, Soo Hyun, Daejeon 34122 (KR)
(74) Representative: Plasseraud IP
(86) International application number: PCT/KR2025/015585
(87) International publication number: WO 2026/079797

(57) **Abstract**

A negative electrode according to exemplary embodiments of the present disclosure includes: a negative electrode current collector; and a negative electrode active material layer disposed on the negative electrode current collector, wherein the negative electrode active material layer includes: a first region disposed on the negative electrode current collector and containing niobium oxide as a negative electrode active material; and a second region disposed on the first region and containing a carbon-based material as a negative electrode active material.

## Description

### [Technical field]

This application claims the benefit of Korean Patent Application No. 10-2024-0136593, filed on October 8, 2024, the disclosure of which is incorporated herein by reference.

The present disclosure relates to a negative electrode and a lithium secondary battery.

### [Background]

Recently, with the increase in technological development and demand for mobile devices, the demand for batteries as energy sources has been rapidly increasing. As HEV, PHEV, and EV automobiles are gaining attention as future automobiles, research on batteries that can meet various requirements is being conducted extensively.

In particular, research on lithium secondary batteries having high energy density along with excellent lifespan and cycle characteristics is being actively conducted. Conventional lithium secondary batteries have mainly used carbon-based compounds capable of reversible lithium ion intercalation and deintercalation while maintaining structural and electrical properties as negative electrode active materials. However, recently, with the increasing demand for development of batteries with high energy density, extensive research is being conducted on transition metals (Group IV, Group V) such as silicon and tin that react chemically with lithium, or their alloys and oxides, in addition to the carbon-based compounds.

To instantiate batteries with high energy density and high power output, research on high-loading electrodes and resistance improvement is being conducted. In high-loading electrodes, as the movement path of lithium ions becomes longer, ion diffusion is delayed, which increases resistance and decreases battery output. Therefore, there is a need for technology development that improves resistance characteristics in high-loading electrodes and increases battery output.

### [Summary]

### [Technical Problem]

The technical problem that the technical concept of the present disclosure seeks to solve is to provide a high-loading negative electrode with improved resistance characteristics and enhanced battery output characteristics.

The problems to be solved by the present disclosure are not limited to the above-mentioned problems, and problems not mentioned will be clearly understood by those of ordinary skill in the art from the present specification and the accompanying drawings.

### [Technical Solution]

A negative electrode according to exemplary embodiments of the present disclosure includes: a negative electrode current collector; and a negative electrode active material layer disposed on the negative electrode current collector, wherein the negative electrode active material layer includes: a first region disposed on the negative electrode current collector and containing niobium oxide as a negative electrode active material; and a second region disposed on the first region and containing a carbon-based material as a negative electrode active material.

In exemplary embodiments, a thickness of the first region is 15% or less of a thickness of the negative electrode active material layer.

In exemplary embodiments, the niobium oxide is a compound represented by the following Chemical Formula 1:

[Chemical Formula 1] MₓNb_{y}O_{z}

In Chemical Formula 1,
M includes one or more selected from W, Mo, Zn, Ni, Sr, and Cu, and
0≤x≤10, 1≤y≤20, and 1.5≤z≤70.

In exemplary embodiments, a loading amount of the negative electrode active material layer is 200 mg/25 cm² or more.

In exemplary embodiments, the niobium oxide is one or a mixture of two or more selected from NbO, NbO₂, Nb₂O₃, and Nb₂O₅.

In exemplary embodiments, a thickness of the first region is 15 µm or less.

In exemplary embodiments, a thickness of the first region is in the range of 3~13 µm.

In exemplary embodiments, the carbon-based material is one or a mixture of two or more selected from natural graphite, artificial graphite, hard carbon obtained by pyrolysis of phenol resin or furan resin, coke, needle coke, or soft carbon obtained by carbonization of pitch.

In exemplary embodiments, the first region and the second region each include a binder, and the binder content in the first region is greater than the binder content in the second region.

In exemplary embodiments, the second region further includes, as a negative electrode active material, one or a mixture of two or more selected from the group consisting of Si, SiOₓ (0<x<2), Si-C composite, and Si metal alloy.

A lithium secondary battery according to exemplary embodiments of the present disclosure includes: a positive electrode; a negative electrode; a separator; and an electrolyte, wherein the negative electrode is the negative electrode described above.

### [Advantageous Effects]

According to exemplary embodiments of the present disclosure, a high-loading negative electrode with excellent output characteristics and resistance characteristics, capable of instantiating high energy density batteries, is provided.

### [Brief Description of the Drawings]

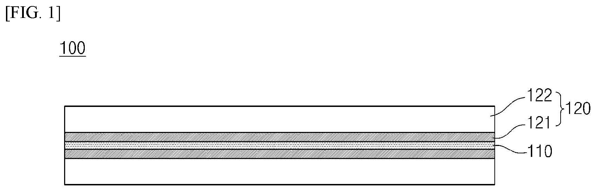

FIG. 1 is a cross-sectional view schematically showing a negative electrode according to exemplary embodiments.

### [Best Mode for Carrying out the Invention]

The following provides a more detailed description of the present disclosure to aid in understanding the present disclosure.

The terms and words used in this specification and the claims should not be interpreted as limited to their conventional or dictionary meanings, but should be interpreted in accordance with the technical concepts of the disclosure, based on the principle that the inventor may appropriately define the concepts of the terms to describe the disclosure in the best possible manner.

The terms used in this specification are merely used to describe exemplary embodiments and are not intended to limit the scope of the disclosure. Unless the context clearly indicates otherwise, singular expressions include plural expressions.

In this specification, terms such as "include," "equipped with," or "have" are intended to specify the existence of the features, numbers, steps, components, or combinations thereof that are implemented, and should not be understood as precluding the possibility of the existence or addition of one or more other features, numbers, steps, components, or combinations thereof.

In this specification, the term "combinations thereof" included in a Markush-form expression refers to one or more mixtures or combinations selected from a group consisting of the components described in the Markush-form expression, meaning that it includes one or more selected from the group consisting of the components described in the Markush-form expression.

In this specification, the description "A and/or B" means "A or B or both."

### Negative electrode

FIG. 1 is a cross-sectional view schematically showing a negative electrode according to exemplary embodiments.

Referring to FIG. 1, a negative electrode 100 according to exemplary embodiments includes a negative electrode current collector 110 and a negative electrode active material layer 120, and the negative electrode active material layer 120 includes a first region 121 and a second region 122. The first region 121 is disposed on the negative electrode current collector 110 and includes niobium oxide as a negative electrode active material. The second region 122 is disposed on the first region 121 and includes a carbon-based material as a negative electrode active material.

The carbon-based material included in the second region 122 is a traditional negative electrode active material with excellent structural stability, so volume change due to repeated charge and discharge is not significant. In the present disclosure, in order to improve resistance and output characteristics in a high-loading negative electrode, the negative electrode active material layer 120 is configured in a bilayer structure including the first region 121 and the second region 122, and niobium oxide with excellent output characteristics is included as a negative electrode active material in the first region 121 close to the negative electrode current collector 110. Since niobium oxide can exist in a state containing lithium within the charge-discharge voltage range of the carbon-based material included in the second region, it can improve the output characteristics of the battery. Furthermore, as the first region 121, which is at a distance from the surface of the negative electrode, includes niobium oxide, the movement path of lithium ions is improved, further improving the output characteristics of the secondary battery. In addition, niobium oxide has superior rapid charging performance and lifespan characteristics compared to titanium materials, so niobium oxide was selected as the negative electrode active material of the first region 121.

The thickness of the first region 121 may be 15% or less of the thickness of the negative electrode active material layer 120. Since the first region 121 serves to improve the movement path of lithium ions, a predetermined thickness range is sufficient. Since niobium oxide, which is the negative electrode active material included in the first region 121, does not have a large capacity compared to carbon-based negative electrode active materials, if the thickness of the first region exceeds this range, it is not preferable in terms of instantiating high energy density of the secondary battery. The thickness of the first region 121 may be 15% or less of the thickness of the negative electrode active material layer 120, specifically 3-15%, and more specifically in the range of 6-12%.

The thickness of the negative electrode active material layer 120 may be in the range of 70-200 µm, specifically 80-170 µm, and more specifically 90-150 µm. Additionally, the thickness of the first region 121 may be 15 µm or less, specifically 3-13 µm, and more specifically in the range of 6-12 µm.

The loading amount of the negative electrode active material layer 120 may be 200 mg/25 cm² or more. Specifically, the loading amount of the negative electrode active material layer 120 may be: 200 mg/25 cm² or more; 200 mg/25 cm² to 900 mg/25 cm²; 250 mg/25 cm² to 900 mg/25 cm²; 300 mg/25 cm² to 900 mg/25 cm²; 200 mg/25 cm² to 800 mg/25 cm²; 250 mg/25 cm² to 800 mg/25 cm²; 250 mg/25 cm² to 750 mg/25 cm²; 250 mg/25 cm² to 700 mg/25 cm²; 300 mg/25 cm² to 600 mg/25 cm²; or in the range of 250 mg/25 cm² to 500 mg/25 cm². The loading amount is based on the loading amount of the negative electrode active material layer disposed on one surface of the current collector. When the loading amount of the negative electrode active material layer 120 is in this range, high output performance can be instantiated along with the energy density of the negative electrode, so it can be easily applied not only to devices requiring high output such as electric vehicles but also to devices requiring high energy density such as ESS.

The first region 121 includes niobium oxide as a negative electrode active material.

The niobium oxide may be a compound represented by the following Chemical Formula 1.

[Chemical Formula 1] MxNbyOz

In Chemical Formula 1,
M includes one or more selected from W, Mo, Zn, Ni, Sr, and Cu, and 0≤x≤10, 1≤y≤20, and 1.5≤z≤70.

In the present disclosure, the niobium oxide is a compound represented by Chemical Formula 1 above, meaning an oxide containing niobium (Nb) as a main metal component. Specifically, the niobium oxide may be one or a mixture of two or more compounds selected from the group consisting of NbO, NbO₂, Nb₂O₃, and Nb₂O₅.

After initial charging, niobium oxide can maintain a state in which lithium ions are intercalated within the charge-discharge voltage range of carbon-based negative electrode active materials. Therefore, niobium oxide can easily release lithium ions toward the negative electrode current collector, thereby shortening the lithium ion movement path of the negative electrode.

Furthermore, niobium oxide may be doped with one or more elements selected from tungsten (W), molybdenum (Mo), zinc (Zn), nickel (Ni), strontium (Sr), and copper (Cu). At this time, the elements may be doped in an amount exceeding 0 mol% and up to 50 mol% based on the mole fraction of niobium (Nb). Specifically, the elements may be doped in amounts exceeding 0 mol% and up to 40 mol%, exceeding 0 mol% and up to 30 mol%, exceeding 0 mol% and up to 20 mol%, exceeding 0 mol% and up to 10 mol%, 1 mol% to 9 mol%, 1 mol% to 20 mol%, 5 mol% to 15 mol%, 10 mol% to 30 mol%, 20 mol% to 40 mol%, or 5 mol% to 35 mol% based on the mole fraction of niobium (Nb). In one embodiment, the niobium oxide may include Nb₂O₅ doped with tungsten (W) at 5-10 mol% based on the mole fraction of niobium (Nb).

By having a doped form of the elements, the niobium oxide can expand the crystal lattice of the niobium oxide, thereby enhancing lithium ion diffusion performance. In addition, when niobium oxide is Nb₂O₅, it can improve the content ratio of tetravalent niobium ions (Nb⁴⁺) and oxygen vacancies, resulting in excellent electrical conductivity and high-rate charge-discharge performance.

The niobium oxide may have a predetermined average particle diameter (D₅₀). Specifically, the niobium oxide may have an average particle diameter (D₅₀) of 0.5 µm to 100 µm. For example, the niobium oxide may have an average particle diameter (D₅₀) of: 1 µm to 90 µm; 5 µm to 70 µm; 5 µm to 50 µm; 5 µm to 30 µm; 5 µm to 20 µm; 5 µm to 10 µm; 10 µm to 30 µm; 10 µm to 50 µm; 15 µm to 45 µm; 50 µm to 100 µm; 60 µm to 90 µm ; 40 µm to 70 µm; 1 µm to 9 µm; or 0.5 µm to 0.9 µm.

The present disclosure can prevent the output performance of the negative electrode from being reduced due to a decrease in specific surface area when the average particle diameter of niobium oxide exceeds the above upper limit by adjusting the average particle diameter (D₅₀) of niobium oxide to the above range. In addition, it can prevent the lithium ion diffusion capacity in the first region 121 from decreasing due to the average particle diameter of niobium oxide being smaller than the above lower limit.

In addition, the niobium oxide may have a structure coated with a carbon layer. Niobium oxide coated with a carbon layer can instantiate higher reversible capacity compared to cases without carbon layer coating.

At this time, the carbon layer may be provided on the surface of niobium oxide with a predetermined thickness. Specifically, the carbon layer may have a thickness of 1 nm to 20 nm, and more specifically 1 nm to 15 nm; 1 nm to 10 nm; 5 nm to 20 nm; 10 nm to 20 nm; 5 nm to 15 nm; or 7 nm to 13 nm.

The second region 122 includes a carbon-based material as a negative electrode active material.

The carbon-based material has been used as a traditional negative electrode active material and has advantages favorable for instantiating high energy density compared to niobium oxide included in the first region 121.

The carbon-based material is not particularly limited as long as it is capable of intercalating and deintercalating lithium ions, and may be a crystalline carbon-based compound, an amorphous carbon-based compound, or a mixture thereof.

Representative examples of the crystalline carbon-based compound include graphite. Such graphite-based crystalline carbon includes, for example, artificial graphite in potato shape or mesocarbon microbeads (MCMB) shape, or natural graphite surface-treated to smoothen edge portions. The amorphous carbon-based compound is a material in which carbon atoms have an amorphous crystal structure, and examples include hard carbon obtained by pyrolysis of phenol resin or furan resin, coke, needle coke, or soft carbon obtained by carbonization of pitch.

According to preferred embodiments, the carbon-based material may be natural or artificial graphite, which has excellent density and conductivity, resulting in large capacity, high energy density, and good output characteristics and rate characteristics.

The carbon-based material may satisfy predetermined ranges of average particle diameter and tap density for high densification of the negative electrode active material layer.

Specifically, the carbon-based material may have an average particle diameter (D₅₀) of 0.5 µm to 20 µm. Specifically, the carbon-based material may have an average particle diameter (D₅₀) of: 0.5 µm to 15 µm; 0.5 µm to 10 µm; 5 µm to 20 µm; 10 µm to 20 µm; 12 µm to 18 µm; 2 µm to 7 µm; 0.5 µm to 5 µm; or 1 µm to 3 µm.

It may be advantageous to make the particle diameter of the carbon-based material as small as possible to maximize the disorder in the expansion direction for each particle to prevent particle expansion due to lithium ion charging. However, if the particle diameter of the carbon-based material is less than 0.5 µm, a large amount of binder may be required due to the increase in the number of particles per unit volume. On the other hand, if the maximum particle diameter exceeds 20 µm, expansion becomes severe, and as charge and discharge are repeated, the bonding between particles and between particles and the current collector deteriorates, which can significantly reduce cycle characteristics.

In addition, the carbon-based material may have a tap density of 0.7 g/cc to 1.5 g/cc. Specifically, the carbon-based negative electrode active material may have a tap density of: 0.7 g/cc to 1.4 g/cc; 0.7 g/cc to 1.3 g/cc; 0.8 g/cc to 1.3 g/cc; 0.92 g/cc to 1.2 g/cc; or 0.95 g/cc to 1.15 g/cc.

The tap density of the carbon-based material refers to the density obtained by filling the voids between particles by tapping or vibrating them uniformly, which is the mass per volume of the carbon-based material composed of particles. The tap density of the carbon-based material not only directly affects the energy density of the negative electrode but also has high relevance to the electrolyte impregnation properties of the negative electrode. The present disclosure can prevent capacity per volume from being reduced due to the relatively decreased content of negative electrode active material per volume of the negative electrode by maintaining the tap density of the carbon-based material at or above the lower limit of the above range. In addition, the present disclosure can prevent the phenomenon of peeling from the current collector due to insufficient rolling of the negative electrode active material layer during negative electrode manufacturing by maintaining the tap density of the carbon-based material at or below the upper limit of the above range, while simultaneously preventing deterioration of the electrolyte impregnation properties and high-rate charge-discharge performance of the negative electrode active material layer.

The second region 122 may further include, as a negative electrode active material, one or a mixture of two or more selected from the group consisting of Si, SiOₓ (0<x<2), Si-C composite, and Si metal alloy, in addition to the carbon-based material. When the silicon-based material is included, it is advantageous for instantiating high energy density batteries.

The negative electrode active material layer 120 may further include a binder and a conductive material in addition to the negative electrode active material described above.

The binder provides adhesion between the negative electrode active material and the conductive material, and further provides adhesion between the negative electrode active material layer and the negative electrode current collector. The binder may be one or more selected from the group consisting of: vinylidene fluoride-hexafluoropropylene copolymer (PVDF-co-HFP), polyvinylidene fluoride (PVdF), polyacrylonitrile, polymethyl methacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, ethylene-propylene-diene monomer, sulfonated ethylene-propylene-diene monomer, styrene butadiene rubber (SBR), and fluorine rubber.

The content of the binder may be in the range of 0.5 wt% to 10 wt%, 1 wt% to 6 wt%, or 2 wt% to 6 wt% based on the total weight of the negative electrode active material layer 120.

In exemplary embodiments, the first region and the second region each include a binder, and the binder content in the first region may be greater than the binder content in the second region. Here, the binder content in the first region refers to the weight percentage of the binder included in the first region relative to the total weight of the first region. And the binder content in the second region refers to the weight percentage of the binder included in the second region relative to the total weight of the second region. When the binder content in the first region is greater than the binder content in the second region, the adhesion between the negative electrode current collector and the negative electrode active material layer is further improved, enabling instantiation of batteries with excellent capacity characteristics.

The conductive material is not particularly limited as long as it has conductivity without causing chemical changes in the battery, and examples include: graphite such as natural graphite or artificial graphite; carbon black such as carbon black, acetylene black, Ketjen black, channel black, furnace black, lamp black, or thermal black; conductive fibers such as carbon fiber or metal fiber; conductive tubes such as carbon nanotubes; fluorocarbon powder, metal powders such as aluminum, or nickel powder; conductive whiskers such as zinc oxide or potassium titanate; conductive metal oxides such as titanium oxide; or conductive materials such as polyphenylene derivatives.

The content of the conductive material may be in the range of 0.5 wt% to 10 wt%, 1 wt% to 6 wt%, or 2 wt% to 6 wt% based on the total weight of the negative electrode active material layer 120.

The negative electrode current collector 110 is a metal with high conductivity to which the slurry of the negative electrode active material can easily adhere, and any metal that is non-reactive in the voltage range of the battery may be used. Specifically, it may be: copper, stainless steel, aluminum, nickel, titanium, fired carbon; stainless steel surface-treated with carbon, nickel, titanium, or silver; aluminum-cadmium alloy; non-conductive polymer surface-treated with conductive material; or conductive polymer. In addition, fine irregularities may be formed on the surface to strengthen the coupling force of the negative electrode active material, and it may be used in various forms such as film, sheet, foil, net, porous body, foam, or non-woven fabric.

The negative electrode 100 may be manufactured, for example, by preparing a negative electrode slurry by adding a negative electrode mixture containing the negative electrode active material to a predetermined solvent, then coating it on a current collector such as metal foil, and drying and rolling.

### Lithium secondary battery

Next, the lithium secondary battery according to the present disclosure will be described.

A lithium secondary battery according to an embodiment of the present disclosure may include a positive electrode, a negative electrode, a separator interposed between the positive electrode and the negative electrode, and an electrolyte.

The lithium secondary battery of the present disclosure can be manufactured according to conventional methods known in the art. For example, it can be manufactured by placing a separator between the positive electrode and the negative electrode and injecting electrolyte.

In exemplary embodiments of the present disclosure, the negative electrode is as described above.

For example, the negative electrode includes: a negative electrode current collector 110; and a negative electrode active material layer 120 disposed on the negative electrode current collector 110; wherein the negative electrode active material layer 120 includes: a first region 121 disposed on the negative electrode current collector 110 and containing niobium oxide as a negative electrode active material; and a second region 122 disposed on the first region 121 and containing a carbon-based material as a negative electrode active material, wherein the thickness of the first region 121 is 15% or less of the thickness of the negative electrode active material layer 120.

According to exemplary embodiments of the present disclosure, niobium oxide is included in the first region 121 away from the surface of the negative electrode, so the movement path of lithium ions is improved in high-loading electrodes, resulting in excellent resistance characteristics. In addition, niobium oxide can improve the output characteristics of the battery. Furthermore, by controlling the thickness of the first region 121 containing niobium oxide to a predetermined range, the energy density of the battery is excellent.

Since the negative electrode has been described in detail above, further redundant description is omitted.

The positive electrode may include a positive electrode current collector and a positive electrode active material layer formed on the positive electrode current collector and containing the positive electrode active material.

In the positive electrode, the positive electrode current collector is not particularly limited as long as it has conductivity without causing chemical changes in the battery. Examples include: stainless steel, aluminum, nickel, titanium, fired carbon, or aluminum or stainless steel surface-treated with carbon, nickel, titanium, silver, etc. In addition, the positive electrode current collector may typically have a thickness of 3 to 500 µm, and fine irregularities may be formed on the surface of the current collector to enhance adhesion of the positive electrode active material. For example, it may be used in various forms such as film, sheet, foil, net, porous body, foam, or non-woven fabric.

The positive electrode active material is not particularly limited, and compounds known in the art as capable of reversible lithium intercalation and deintercalation can be used without limitation. Specifically, the positive electrode active material may include: layered compounds such as lithium cobalt oxide (LiCoO₂), lithium nickel oxide (LiNiO₂), or compounds substituted with one or more transition metals; lithium manganese oxides such as Li₁₊ₓMn₂₋ₓO₄ (where x is 0 to 0.33), LiMnO₃, LiMn₂O₃, or LiMnO₂; lithium copper oxide (Li₂CuO₂); vanadium oxides such as LiV₃O₈, LiV₃O₄, V₂O₅, or Cu₂V₂O; Ni site-type lithium nickel oxides represented by the formula LiNi₁₋ₓMₓO₂ (where M = Co, Mn, Al, Cu, Fe, Mg, B, or Ga, and x = 0.01 to 0.3); lithium manganese composite oxides represented by the formula LiMn₂₋ₓMₓO₂ (where M = Co, Ni, Fe, Cr, Zn, or Ta, and x = 0.01 to 0.1) or Li₂Mn₃MO₈ (where M = Fe, Co, Ni, Cu, or Zn); lithium manganese composite oxides with spinel structure represented by LiNiₓMn₂₋ₓO₄; LiMn₂O₄ with part of Li substituted with alkaline earth metal ions; disulfide compounds; lithium iron phosphate represented by LiFePO₄; disulfide compounds; or Fe₂(MoO₄)₃, but are not limited thereto.

However, since the battery to which the present disclosure is applied requires improvement in energy density, the positive electrode active material may be a lithium transition metal oxide with high Ni content represented by the following Chemical Formula 2.

[Chemical Formula 2] Li₁₊ₓNiₐCo_{b}Mn_{c}M_{1-(a+b+c)}O_{2-y}A_{y}

In the formula,
M is at least one selected from the group consisting of Cu, Ti, Mg, Al, Pt, and Zr,
A is an oxygen-substitutional halogen, and
0≤x≤0.5, 0.8≤a≤1, 0≤b≤0.2, 0≤c≤0.2, 0.9≤a+b+c≤1, and 0≤y≤0.001.

More specifically, a may be 0.88≤a<1.

In addition, the lithium transition metal oxide represented by Chemical Formula 2 may be mixed with other active materials.

The positive electrode active material layer may include a positive electrode conductive material and a positive electrode binder along with the positive electrode active material described above.

The positive electrode conductive material is used to provide conductivity to the electrode, and may use: carbon black, graphite, carbon fiber, carbon nanotubes, metal powder, conductive metal oxides, organic conductive materials, etc. Currently commercially available products as conductive materials include: acetylene black series (products from Chevron Chemical Company or Gulf Oil Company), Ketjen Black EC series (products from Armak Company), Vulcan XC-72 (products from Cabot Company), and Super P (products from MMM). Among these, carbon nanotubes, carbon nanofibers, and carbon black are preferred as the conductive material of the present disclosure, and carbon nanotubes are most preferred. The conductive network of carbon nanotubes can alleviate the migration phenomenon of the binder during the drying process of the positive electrode slurry, making it most preferable as the conductive material included in the positive electrode of the present disclosure.

The BET specific surface area of the carbon nanotubes may be: 100 m²/g to 1000 m²/g, 150 m²/g to 800 m²/g, 150 m²/g to 500 m²/g, 150 m²/g to 300 m²/g, or 150 m²/g to 200 m²/g.

The positive electrode conductive material may be included in the positive electrode active material layer at 0.1 to 30 wt%, specifically 0.1 to 10 wt%, and more specifically 0.5 to 5 wt%.

As the positive electrode binder, commonly used binder polymers can be used without limitation. Examples include: polyvinylidene fluoride-hexafluoropropylene (PVDF-co-HFP), polyvinylidene fluoride (PVDF), polyacrylonitrile, polymethyl methacrylate, styrene-butadiene rubber (SBR), carboxyl methyl cellulose (CMC), and various types of binder polymers.

The positive electrode binder may be included in the positive electrode active material layer at 0.1 to 30 wt%, specifically 0.1 to 10 wt%, and more specifically 0.5 to 5 wt%.

As the separator, any porous substrate commonly used as a separator in lithium secondary batteries can be used. For example, a polyolefin-based porous membrane or non-woven fabric may be used, but it is not particularly limited thereto. In particular, it is preferable that it has low resistance to ion movement of the electrolyte and has excellent electrolyte retention ability.

Examples of the polyolefin-based porous membrane include membranes formed from polyolefin-based polymers such as polyethylene such as high-density polyethylene, linear low-density polyethylene, low-density polyethylene, ultra-high molecular weight polyethylene, polypropylene, polybutylene, polypentene, etc., either alone or as a mixture thereof.

As the non-woven fabric, in addition to polyolefin-based non-woven fabric, for example, non-woven fabric formed from polyethylene terephthalate, polybutylene terephthalate, polyester, polyacetal, polyamide, polycarbonate, polyimide, polyetheretherketone, polyethersulfone, polyphenylene oxide, polyphenylene sulfide, polyethylene naphthalene, etc., either alone or as a mixture thereof, may be used. The structure of the non-woven fabric may be a spunbond non-woven fabric composed of long fibers or a melt-blown non-woven fabric.

The thickness of the porous substrate is not particularly limited but may be 5 to 50 µm, and the pore size and porosity present in the porous substrate are also not particularly limited but may be 0.01 to 50 µm and 10 to 95%, respectively.

Meanwhile, to improve the mechanical strength of the separator composed of the porous substrate and suppress short-circuiting between the positive electrode and negative electrode, a porous coating layer including inorganic particles and a binder polymer may be further included on at least one surface of the porous substrate.

Meanwhile, in the lithium secondary battery, the electrolyte may include an organic solvent and a lithium salt commonly used in electrolytes, and is not particularly limited.

As the organic solvent, any solvent capable of serving as a medium through which ions involved in the electrochemical reaction of the battery can move may be used without particular limitation. Specifically, as the organic solvent, the following may be used: ester-based solvents such as methyl acetate, ethyl acetate, γ-butyrolactone, ε-caprolactone; ether-based solvents such as dibutyl ether or tetrahydrofuran; ketone-based solvents such as cyclohexanone; aromatic hydrocarbon-based solvents such as benzene or fluorobenzene; or carbonate-based solvents such as dimethyl carbonate (DMC), diethyl carbonate (DEC), methyl ethyl carbonate (MEC), ethyl methyl carbonate (EMC), ethylene carbonate (EC), or propylene carbonate (PC).

Among these, carbonate-based solvents are preferable, and a mixture of cyclic carbonates (e.g., ethylene carbonate or propylene carbonate) having high ionic conductivity and high dielectric constant that can enhance charge-discharge performance of the battery, and low-viscosity linear carbonate-based compounds (e.g., ethyl methyl carbonate, dimethyl carbonate, or diethyl carbonate) is more preferable.

The lithium salt may be used without particular limitation as long as it is a compound capable of providing lithium ions used in lithium secondary batteries. Specifically, the lithium salt may be: LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The lithium salt is preferably included in the electrolyte at a concentration of approximately 0.6 mol% to 2 mol%.

In addition to the electrolyte components described above, the electrolyte may further include one or more additives for purposes such as improving battery lifespan characteristics, suppressing battery capacity reduction, and improving battery discharge capacity. Examples include: pyridine, triethyl phosphite, triethanolamine, cyclic ether, ethylene diamine, n-glyme, hexamethyl phosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxyethanol, or aluminum trichloride. At this time, the additive may be included at 0.1 to 5 wt% based on the total weight of the electrolyte.

The lithium secondary battery of the present disclosure can be manufactured by forming an electrode assembly by placing a separator between the positive electrode and the negative electrode, putting the electrode assembly in a cylindrical battery case or a prismatic battery case, and then injecting electrolyte. Alternatively, after stacking the electrode assembly, it may be manufactured by impregnating it with electrolyte and sealing the obtained result in a battery case.

When manufacturing the lithium secondary battery of the present disclosure, the electrode assembly may be dried to remove one or more organic solvents selected from the group consisting of N-methyl-2-pyrrolidone (NMP), acetone, ethanol, propylene carbonate, ethyl methyl carbonate, ethylene carbonate, and dimethyl carbonate used in positive electrode manufacturing. If an electrolyte having the same component as the organic solvent used in positive electrode manufacturing is used as the electrolyte, the step of drying the electrode assembly may be omitted.

Unlike the lithium secondary battery described above, a lithium secondary battery according to another embodiment of the present disclosure may be an all-solid-state battery.

The battery case may be one commonly used in the art, and there is no limitation on the external shape according to the use of the battery. For example, it may be cylindrical using a can, prismatic, pouch-type, or coin type.

The lithium secondary battery according to the present disclosure can stably exhibit excellent resistance characteristics, discharge capacity, output characteristics, and capacity retention rate, and is therefore useful in portable device fields such as mobile phones, laptop computers, digital cameras, as well as energy storage systems (ESS) and electric vehicle fields such as hybrid electric vehicles (HEV).

Hereinafter, the present disclosure will be described in more detail through examples. However, the following examples are for illustrating the present disclosure, and the scope of the present disclosure is not limited thereto.

### Example 1: Preparation of negative electrode

### (Preparation of first negative electrode slurry)

Water was injected into a homo mixer, and niobium oxide (average particle diameter (D₅₀): 20±5 µm) as a negative electrode active material, carbon black as a conductive material, and carboxymethyl cellulose (CMC) and styrene butadiene rubber (SBR) as binders in a 1:1 weight ratio were added and mixed to prepare a first negative electrode slurry. At this time, the weight ratio of negative electrode active material, conductive material, and binder was 90:5:5.

### (Preparation of second negative electrode slurry)

Water was injected into a homo mixer, and artificial graphite as a negative electrode active material, carbon black as a conductive material, and carboxymethyl cellulose (CMC) and styrene butadiene rubber (SBR) mixed in a 1:1 weight ratio as binders were added and mixed to prepare a second negative electrode slurry. At this time, the weight ratio of negative electrode active material, conductive material, and binder was 94:3:3.

### (Preparation of negative electrode)

On one surface of a copper foil (average thickness: 12 µm) as a negative electrode current collector, the first and second negative electrode slurries were simultaneously coated such that the first negative electrode slurry was stacked on the negative electrode current collector and the second negative electrode slurry was stacked on the first negative electrode slurry.

Then, it was dried in a vacuum oven at 130°C and rolled to prepare a negative electrode. At this time, the loading amount of the rolled negative electrode active material layer was about 330±20 mg/25 cm², and the thickness of the first region formed from the first negative electrode slurry was 10 µm, which was 10% of the negative electrode active material layer thickness.

### Examples 2 to 6: Preparation of negative electrodes

Negative electrodes were prepared in the same manner as Example 1, except that the type of niobium oxide included in the first negative electrode slurry or the thickness of the first region was changed as shown in Table 1.

**[Table 1]**

| | **Type of Niobium Oxide** | **Thickness of First Region (µm)** | **Thickness Ratio of First Region Based on Negative electrode Active Material Layer Thickness (%)** |
|---|---|---|---|
| **Example 1** | Nb₂O₅ | 10 | 10 |
| **Example 2** | Nb₂O₅ | 8 | 8 |
| **Example 3** | 10mol% W doped Nb₂O₅ | 10 | 10 |
| **Example 4** | NbO | 10 | 10 |
| **Example 5** | Nb₂O₅ | 15 | 15 |
| **Example 6** | Nb₂O₅ | 25 | 25 |

### Comparative Example: Preparation of negative electrode

A negative electrode slurry was prepared with the same composition and method as the second negative electrode slurry of Example 1.

On a copper foil (average thickness: 12 µm) as a negative electrode current collector, the negative electrode slurry was coated, dried in a vacuum oven at 130°C, and then rolled to prepare a negative electrode. At this time, the loading amount of the rolled negative electrode active material layer was about 330±20 mg/25 cm².

### Experimental Example 1: Evaluation of discharge resistance characteristics

### (Preparation of positive electrode)

LiNi_{0.8}Co_{0.1}Mn_{0.1}O₂ as a positive electrode active material, carbon black as a conductive material, and PVdF (polyvinylidene fluoride) as a binder were mixed and stirred in N-methylpyrrolidone solvent at a weight ratio of 90:5:5 to prepare a positive electrode slurry.

The positive electrode slurry was coated on both sides of an aluminum current collector with a thickness of 20 µm, and dried and rolled to prepare a positive electrode.

### (Assembly of lithium secondary battery)

An electrode assembly was manufactured by alternately stacking two single-sided positive electrodes, one double-sided positive electrode, and separators from Example 1. The electrode assembly was inserted into a battery case, and electrolyte was injected to manufacture a full cell. At this time, the electrolyte used was one in which 1M LiPF₆ was dissolved in an organic solvent in which ethylene carbonate (EC), dimethyl carbonate (DMC), and ethyl methyl carbonate (EMC) were mixed in a volume ratio of 3:4:3.

Using each negative electrode of Examples 2-6 and the Comparative Example, each full cell was manufactured in the same manner as above.

### (Preparation of lithium secondary battery)

For each full cell manufactured using each negative electrode of Examples 1-6 and the Comparative Example, after pre-aging at room temperature (22±2°C) for 2 days, they were charged at 0.1C until reaching a state of charge (SOC) of 30% for activation. Then, each activated lithium secondary battery was aged at room temperature (22±2°C) and 60°C for 1 day each, and gas formed inside the pouch was discharged to prepare experimental lithium secondary batteries.

### (Discharge resistance evaluation)

Each prepared lithium secondary battery manufactured in Examples and Comparative Example was charged to a state of charge (SOC) of 10% at room temperature (22±2°C). Then, each lithium secondary battery was discharged at 2.5C for 10 seconds while recording the voltage drop that occurred, and the direct current internal resistance (DCIR) of each lithium secondary battery was calculated from the recorded results using R=V/I.

Additionally, each prepared lithium secondary battery manufactured in Examples and Comparative Example was charged to a state of charge (SOC) of 50% at room temperature (22±2°C). Then, each lithium secondary battery was discharged at 2.5C for 10 seconds while recording the voltage drop that occurred, and the direct current internal resistance (DCIR) of each lithium secondary battery was calculated from the recorded results using R=V/I.

At this time, the charging and discharging were performed under the following conditions, and the calculated resistance values are shown in Table 2 below:
[Charging] 0.33C CC/CV, 4.2V and 0.05C cut-off
[Discharging] 0.33C CC, 2.5V cut-off

### Experimental Example 2: Evaluation of output characteristics

Lithium secondary batteries manufactured using each negative electrode of Examples 1-6 and the Comparative Example were prepared in the same manner as Experimental Example 1.

Each prepared lithium secondary battery manufactured in Examples and Comparative Example was charged at room temperature (22±2°C) with a constant current of 0.33C to 4.2V, and charged at a constant voltage of 4.2V until the current value reached 0.05C. Thereafter, each lithium secondary battery was aged for 10 minutes and then discharged at a constant current of 0.33C until 2.5V while measuring the discharge capacity.

Subsequently, after charging in the same manner as above, discharge capacity was measured while discharging at a constant current of 2C until 2.5V. The ratio of discharge capacity measured at a constant current of 2C to the discharge capacity measured at a constant current of 0.33C was calculated to evaluate output characteristics. The results are shown in Table 2.

### Experimental Example 3: Measurement of energy density per volume

The energy density per volume of each lithium secondary battery manufactured using each negative electrode of Examples 1-6 and the Comparative Example was measured, and the results are shown in Table 2.

**[Table 2]**

| | **Discharge Resistance @SOC50( Ω)** | **Discharge Resistance @SOC10( Ω)** | **2C Capacity Relative to 0.33C Capacity (%)** | **Energy Density per Volume (Wh/L)** |
|---|---|---|---|---|
| **Example 1** | 0.58 | 1.04 | 92.3 | 457 |
| **Example 2** | 0.60 | 1.07 | 91.64 | 458 |
| **Example 3** | 0.57 | 1.02 | 93.0 | 458 |
| **Example 4** | 0.59 | 1.06 | 91.95 | 458 |
| **Example 5** | 0.57 | 1.03 | 93.3 | 453 |
| **Example 6** | 0.55 | 1.01 | 93.5 | 431 |
| **Compar ative Example** | 0.62 | 1.14 | 90.67 | 460 |

Lithium secondary batteries manufactured using negative electrodes according to Examples 1 to 6 showed excellent resistance characteristics and output characteristics compared to lithium secondary batteries manufactured using negative electrodes according to the Comparative Example.

Lithium secondary batteries manufactured using negative electrodes according to Examples 1 to 5 showed much better energy density per volume compared to lithium secondary batteries manufactured using negative electrodes according to Example 6. Since the negative electrode according to Example 6 has the thickest first region containing niobium oxide, it is evaluated that energy density was reduced as a result of relatively decreased content of carbon-based material. Meanwhile, lithium secondary batteries manufactured using negative electrodes according to Example 6 did not show significant improvement effects in resistance characteristics and output characteristics compared to lithium secondary batteries manufactured using negative electrodes according to Example 5. Therefore, in the present disclosure, it is evaluated that the first region is preferably 15% or less of the negative electrode active material layer thickness.

The present disclosure has been described in more detail above with reference to the drawings and embodiments. However, it should be understood that the configurations described in the drawings or embodiments are only one embodiment of the disclosure and do not represent all of the technical ideas of the disclosure, and that there may be various equivalents and modifications that may be substituted for them at the time of filing the present application.

### [Description of Reference Numerals]

100: NEGATIVE ELECTRODE
110: NEGATIVE ELECTRODE CURRENT COLLECTOR
120: NEGATIVE ELECTRODE ACTIVE MATERIAL LAYER
121: FIRST REGION
122: SECOND REGION

## Claims

1. A negative electrode comprising:
a negative electrode current collector; and
a negative electrode active material layer disposed on the negative electrode current collector, wherein
the negative electrode active material layer comprises:
a first region disposed on the negative electrode current collector and containing niobium oxide as a negative electrode active material; and
a second region disposed on the first region and containing a carbon-based material as a negative electrode active material.

2. The negative electrode of claim 1, wherein
a thickness of the first region is 15% or less of a thickness of the negative electrode active material layer.

3. The negative electrode of claim 1, wherein
the niobium oxide is a compound represented by the following Chemical Formula 1:
[Chemical Formula 1] MₓNb_{y}O_{z}
In Chemical Formula 1,
M includes one or more selected from W, Mo, Zn, Ni, Sr, and Cu, and
0≤x≤10, 1≤y≤20, and 1.5≤z≤70.

4. The negative electrode of claim 1, wherein
a loading amount of the negative electrode active material layer is 200 mg/25 cm² or more.

5. The negative electrode of claim 1, wherein
the niobium oxide is one or a mixture of two or more selected from NbO, NbO₂, Nb₂O₃, and Nb₂O₅.

6. The negative electrode of claim 1, wherein
a thickness of the first region is 15 µm or less.

7. The negative electrode of claim 1, wherein
a thickness of the first region is in the range of 3~13 µm.

8. The negative electrode of claim 1, wherein
the carbon-based material is one or a mixture of two or more selected from natural graphite, artificial graphite, hard carbon obtained by pyrolysis of phenol resin or furan resin, coke, needle coke, or soft carbon obtained by carbonization of pitch.

9. The negative electrode of claim 1, wherein
the first region and the second region each comprise a binder, and
the binder content in the first region is greater than the binder content in the second region.

10. The negative electrode of claim 1, wherein
the second region further comprises, as a negative electrode active material, one or a mixture of two or more selected from the group consisting of Si, SiOₓ (0<x<2), Si-C composite, and Si metal alloy.

11. A lithium secondary battery comprising: a positive electrode; a negative electrode; a separator; and an electrolyte, wherein
the negative electrode is the negative electrode according to any one of claims 1 to 10.
